# EUROPEAN PATENT APPLICATION

(11) **EP 1 681 675 A2**
(43) Date of publication of application: **19.07.2006**
(21) Application number: 06000847.1
(22) Date of filing: 16.01.2006
(51) Int. Cl.: G11B 7/26

(54) **Mastering apparatus, mastering method and optical recording medium**

(30) Priority: 18.01.2005 JP 2005009800
(71) Applicant: SONY CORPORATION, Tokyo (JP)
(72) Inventor: Imanishi, Shingo, Shinagawa-ku, Tokyo (JP)
(74) Representative: Müller - Hoffmann & Partner

(57) **Abstract**

A mastering apparatus for forming a pit string based on recording data on an optical-recording-medium master by a heat recording method using laser-light irradiation. The mastering apparatus includes: laser-light-source means for emitting laser light at the timing based on first recording data in order to form a pit; light-intensity control means for controlling light intensity of the laser light output from the laser-light-source means on the basis of second recording data; and optical system means for guiding the laser light onto the optical-recording-medium master through the light-intensity control means.

## Description

### CROSS REFERENCES TO RELATED APPLICATIONS

The present invention contains subject matter related to Japanese Patent Application JP 2005-009800 filed in the Japanese Patent Office on January 18, 2005, the entire contents of which are incorporated herein by reference.

### BACKGROUND OF THE INVENTION

### 1. Field of the Invention

The present invention relates to a production apparatus of an optical-recording-medium master for producing an optical recording medium such as an optical disc, etc., a production method, and an optical recording medium produced from the optical-recording-medium master.

### 2. Description of the Related Art

In general, on a playback-only recording medium, a playback signal changes between a High level (H) and a Low level (L) in synchronism with a clock which gives standard unit time, and information is recorded using the combination of the length of the H-level and the L-level. On a playback-only optical disc, the H-level and the L-level are usually represented by a pit string disposed on a track. That is to say, a pit string including pits and land portions between the pits is scanned for playback, and thus the H-level and the L-level are obtained as a playback signal.

For a playback-only optical disc on which a pit string is formed by so-called embossed pits, a disc master is produced by laser exposure in order to form a pit string in accordance with recording data as a mastering process. Next, a stamper is created from the disc master, and optical discs are mass-produced using the stamper. Various techniques on the production of a disc master and the formation of pits have been disclosed in Japanese Unexamined Patent Application Publication Nos. 2002-150621, 2003-45030, 9-185849 and 10-302322, and International Publication No. 2004/034391.

### SUMMARY OF THE INVENTION

When a playback signal read from a pit string changes from H to L or vice versa at timing out of sync with the clock, the probability of the occurrence of read errors becomes high. However, as is publicly known, errors can be corrected up to a ratio of about 10⁻³ to 10⁻⁴ by performing error-correction processing, and thus correct information can be reproduced.

Using this inversely, it is possible to increase the amount of information to be recorded by changing the signal between H and L slightly out of sync with the clock intentionally within a range allowing error correction, that is to say, by making the timing of the signal edge out of sync and using the direction and the amount of the difference as information. This means that if the edge positions of pits are controlled at pit forming time, it becomes possible to represent second information by the edge position of each pit in addition to first information represented by a pit string itself.

Up to now, for producing a ROM disc of a CD (Compact Disc) method, a DVD (Digital Versatile Disc) method, etc., first, it has been necessary to prepare a disc master on which photo-resist is applied. Next, a laser beam is focused onto the disc master from a light source such as a gas laser, etc., using a mastering apparatus (master exposing apparatus) in order to form an exposure pattern.

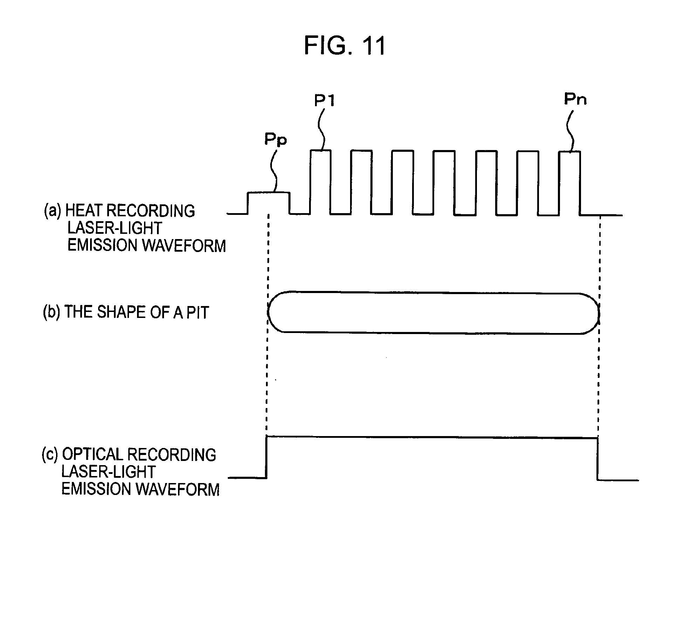

In this case, laser light from a laser light source, which is a continuous oscillation laser, is light-intensity modulated by, for example an AOM (Acousto-Optical Modulator), and the light-intensity modulated laser light is guided on the disc master by an optical system for exposure. That is to say, for example an NRZ (Non Return to Zero) modulation signal, which is a pit-modulation signal, is given to the AOM. The laser beam is intensity-modulated in accordance with a pit pattern by the AOM, and thus only the pit portion is exposed on the master. For example, Fig. 11(b) shows one pit, and the laser-light intensity modulated by the AOM becomes as shown in Fig. 11(c). The exposure of the photo-resist on the master is so-called optical recording, and thus the portion exposed by laser as shown in Fig. 11 directly becomes a pit.

When an optical disc master is exposed in this manner, as described above, in order to control the edge position of a pit, the edge timing of the NRZ modulation signal to be input into the AOM should be changed.

The clock frequency at exposure time is usually about 10 to 70 MHz, and thus the clock cycle becomes about 15 to 100 ns. Furthermore, a run-length limited modulation signal such as RLL (1-7) pp, EFM, etc., maintains the same level at least for two cycles and three cycles, respectively, and thus the change time of the H/L level becomes 30 to 200ns or 45 to 300ns. Accordingly, there relatively will be a margin for creating a signal-generation circuit which controls the edge timing of the NRZ modulation signal.

That is to say, when the output light from a laser is modulated by an external modulator such as an AOM, etc., it is sufficient only to add the change of edges to the NRZ modulation signal. Although it is necessary to keep the precision of the edge positions of the signal generator, the cycle of the changes will not become extremely too short. Thus, this can be considered to be realized relatively easily.

On the other hand, in recent years, as known as PTM (Phase Transition Mastering), developments have been conducted on an exposure method of heat recording by irradiating a laser beam from a semiconductor laser onto a master on which inorganic resist has been applied. Techniques on the PTM has been disclosed in International Publication No. 2004/034391 described above.

In this case, the exposure is usually performed using a pulse beam as shown in Fig. 11(a) in order to make the width of pits uniform by preventing the accumulation of heat caused by laser irradiation. That is to say, in this case, in general, an NRZ modulation signal in synchronism with a clock is converted into a pulse signal having a time width shorter than the clock cycle in accordance with the length of the H level, and electric power is supplied to the semiconductor laser capable of being directly modulated in synchronism with the converted pulse-modulation signal. Thus, a laser-beam is output by a preheating pulse beam Pp and heating pulse beams P1 to Pn in accordance with the length of a pit.

Accordingly, in the case of such a heat recording method, perturbation of a pit edge is not added only by adding edge changes of the NRZ modulation signals. In order to control pit edges, it is necessary to make a modification to take into consideration of an edge-change signal when converting the NRZ modulation signals into the pulse modulation signal to be given to the laser source.

However, the clock cycle at exposure time becomes very short with an increase of the density of an optical disc. Also, since the pulse width at pulse-beam generation time includes about 20 to 50 clock cycles, in order to control the intensity of the laser beam pulse-emitted for the edge control, it becomes necessary to provide a signal-generation circuit capable of changing a pulse level and a pulse period at a very high speed.

Furthermore, it becomes necessary to have a very complicated and precise conversion circuit in order to add edge changes at accurate timing. Also, in general, a signal-delay element called a delay line is used for changing the edge timing. However, it is very difficult to increase the precision and the resolution of a high-speed delay line.

In view of such problems, it is desirable to control pit edges relatively easily to allow recording additional information by the edge control in a master exposure method of emitting laser pulses as a heat recording method.

According to an embodiment of the present invention, there is provided a mastering apparatus for forming a pit string based on recording data on an optical-recording-medium master by a heat recording method using laser-light irradiation, the mastering apparatus including: laser-light-source means for emitting laser light at the timing based on first recording data in order to form a pit; light-intensity control means for controlling light intensity of the laser light output from the laser-light-source means on the basis of second recording data; and optical system means for guiding the laser light onto the optical-recording-medium master through the light-intensity control means.

Also, in the above-described embodiment, the laser light output from the laser-light-source means is preferably pulse-light-emission controlled in a period of forming one pit, and the light-intensity control means controls the light intensity in part of the pulse-light-emission period in the pulse-light emission.

Also, in the above-described embodiment, the light-intensity control means preferably controls the light intensity by controlling diffraction efficiency using an acousto-optical modulator in order to transmit only particular diffraction light using a spatial frequency filter.

Also, in the above-described embodiment, the light-intensity control means preferably controls the light intensity by polarization control using electro-optical modulator in order to transmit only a particular polarization component using a polarization-component separation modulator.

According to an embodiment of the present invention, there is provided a method for mastering in order to form a pit string based on recording data on an optical-recording-medium master by a heat recording method using laser light irradiation, the method including the steps of: laser-emitting for emitting laser light in order to form a pit at the timing based on first recording data; light-intensity controlling for controlling light intensity output in the laser-emitting step based on second recording data; and exposing for guiding the laser light after being subjected to light-intensity controlling in the light-intensity controlling step.

Also, according to an embodiment of the present invention, there is provided an optical recording medium including a pit string formed based on first recording data, wherein all of or part of each pit constituting the pit string has an edge position in the direction of the pit string is set based on second recording data.

That is to say, in the present invention, the control of the pit-edge positions (the control of changing edges) are not performed by the laser-pulse timing. A laser light is emitted by a usual pulse modulation from a laser-light source without the edges being changed, and then only the exposure power of the laser light output from the laser-light source is changed at both ends of a pit by light-intensity control means. At this time, the change of the light intensity at a pit-edge portion is recorded as the change of a pit length (that is to say, the change of an edge position of a pit).

For light-intensity means, for example by using an acousto-optical modulator (AOM) to control diffraction efficiency, the amount of changes in light-intensity in zero-order of diffraction light is controlled, and furthermore, the zero-order order of diffraction light can be shaped by a spatial-frequency filter (that is to say, light other than zero-order order diffraction light is blocked). Alternatively, a polarized beam is controlled using an electro-optical modulator (EOM), and the polarization component is separated by a polarization component separation element such as a polarization-beam splitter (PBS), etc. Thus, the amount of the changes of the amount font changes in the light intensity can be controlled.

According to the present invention, the positions of pit edges are not controlled by the laser-pulse timing. However, laser light is emitted by a usual pulse modulation from a laser-light source without the edges being changed, and then only the exposure power of the laser light output from the laser light source is changed at both ends of a pit by light-intensity control means. Accordingly, it is possible to achieve the recording of information representing second recording data by pit-edge positions by providing light-intensity control means using an AOM or an EOM, etc., and generating a control signal based on the second recording data on the control means without adding a major change to the generation-circuit system of the pulse modulation signal for laser drive.

In general, when an edge position of a pit itself is changed, the time resolution of edge changes are limited by the time resolution of a delay line. However, in heat recording, edge changes can be provided by the strength of beam intensity (laser power) for exposure. The light intensity can be controlled by controlling a voltage, and thus the control can be performed with more precise resolution.

Of course, the pulse-light irradiation signal to the laser-light source itself is not controlled, and thus a high-speed and complicated circuit system is not necessary as a circuit system for forming laser-light irradiation drive signal on the basis of first recording data.

Accordingly, it is possible to easily achieve an exposure operation in order to form a pit string using the first recording data and to form the second recording data by the edge positions of the pits as an exposure apparatus for emitting pulse light for heat recording.

Also, on an optical recording medium to be produced from an optical-recording-medium master created in this manner, it is possible to record first data by a pit string and to record second data including additional information, etc. Thus, it is possible to provide a medium having an increased recording capacity, and having pits containing various information by themselves.

### BRIEF DESCRIPTION OF THE DRAWINGS

Fig. 1 is a block diagram of an exposure optical system of a mastering apparatus according to an embodiment of the present invention;
Fig. 2 is a block diagram of a data modulation system of the mastering apparatus according to the embodiment;
Fig. 3 is an explanatory diagram of pit-edge control of the embodiment;
Fig. 4 is an explanatory diagram of pit-edge control of the embodiment;
Fig. 5 is an explanatory diagram of pit-edge control of the embodiment;
Fig. 6 is an explanatory diagram of pit-edge control of the embodiment;
Fig. 7 is an explanatory diagram of pit-edge control of the embodiment;
Fig. 8 is a block diagram of an exposure optical system of a mastering apparatus according to another embodiment of the present invention;
Fig. 9 is an explanatory diagram of five-value recording by controlling pit-edges according to the embodiment;
Fig. 10 is an explanatory diagram of disc production steps; and
Fig. 11 is an explanatory diagram of laser-light emission intensity and the shape of a pit.

### DESCRIPTION OF THE PREFERRED EMBODIMENTS

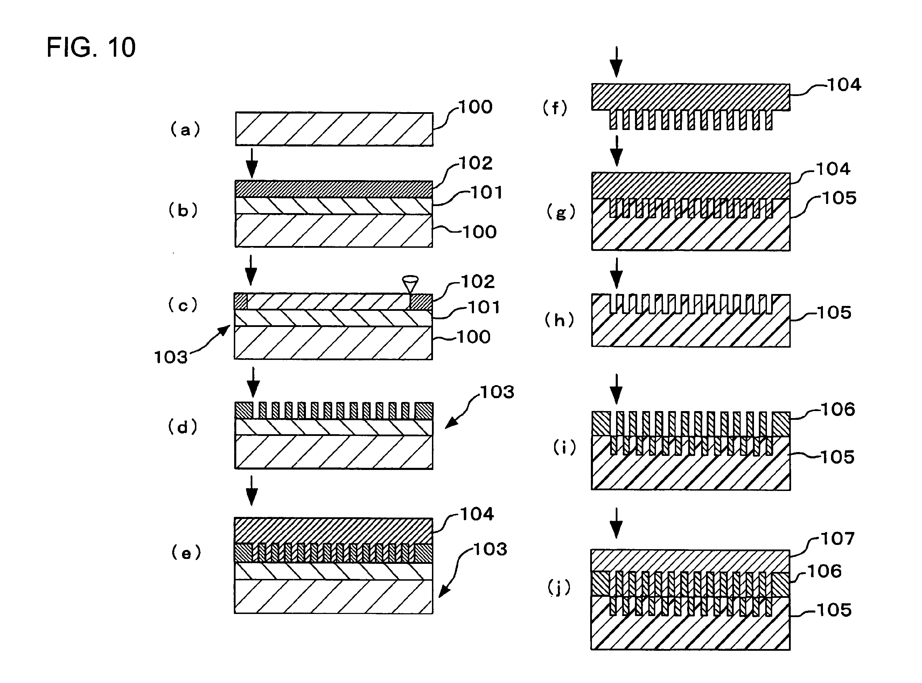

In the following, a description will be given of mastering apparatuses for producing a master of an optical disc by a PTM method as an embodiment of the present invention. First, a description will be given of the procedure for producing an optical disc including the production of a master with reference to Fig. 10.

Fig. 10(a) illustrates a substrate 100 constituting a disc master. First, a resist layer 102 including predetermined inorganic resist material is uniformly formed on the substrate 100 by a sputtering method (resist-layer forming step, Fig. 10(b)). The material provided for the resist layer 102 will be described in detail below. In this regard, a predetermined intermediate layer 101 may be formed between the substrate 100 and the resist layer 102 in order to improve the exposure sensitivity of the resist layer 102. Fig. 10(b) shows that state. The layer thickness of the resist layer 102 may be arbitrarily set, but is preferably within a range of 10 nm to 80 nm.

Next, the resist layer 102 is selectively exposed to light corresponding to a pit string as a signal pattern using the mastering apparatus according to the present embodiment described below (resist-layer exposure step, Fig. 10(c)). Next, the resist layer 102 is developed so that a disc master 103, on which a predetermined concave and convex pattern (a pit string) is formed, is produced (resist-layer development step, Fig. 10(d)).

Next, a metallic nickel film is deposited on the concave-convex pattern surface of the disc master 103 produced as described above (Fig. 10(e)). This film is detached from the master 103, and then is subjected to predetermined process in order to obtain a molding stamper 104 on which the concave-convex pattern surface of the master 103 has been transferred (Fig. 10(f)).

Using the molding stamper 104, a resin disc substrate 105 made of polycarbonate, which is thermoplastic resin, is molded by an injection molding method (Fig. 10(g)).

Next, the stamper 104 is separated (Fig. 10(h)). A reflection film 106 (Fig. 10(i)) made of Al alloy, etc., and a protection film 107 having a film thickness of about 0.1 mm are formed on the concave-convex surface of the resin disc substrate, and thus an optical disc is obtained (Fig. 10(j)).

In such a production process, a resist material to be applied to the resist layer 102 used for producing the master 103 is an incomplete oxide of a transition metal. Here, an incomplete oxide of a transition metal is defined as a compound having a lower oxygen content than a stoichiometric composition based on the valence of the transition metal. That is to say, an incomplete oxide of a transition metal is a compound which includes less oxygen content than the oxygen content of the stoichiometric composition allowed on the basis of the valence of that transition metal.

For example, a description will be given of a chemical formula MoO₃ as an incomplete oxide of a transition metal. When the oxidation state of the chemical formula MoO₃ is converted into the composition ratio Mo_{1-X}O_{X}, if x = 0.75, then it means that the compound is a complete oxide, whereas if 0 < x < 0.75, the compound is an incomplete oxide, which has a less oxygen content than the oxygen content allowed by the stoichiometric composition.

Also, some transition metals allow to form oxides including one element having different valences. In this case, an incomplete oxide is defined as an oxide having less oxygen content than the stoichiometric composition based on the valence of the transition metal. For example, in the case of Mo, a trivalent oxide (MoO₃) described above is the most stable. However, there is a univalent oxide (MoO) in addition. In this case, when the oxidation state is converted into the composition ratio Mo_{1-X}O_{X}, if 0 < x < 0.5, it means that the oxide is an incomplete oxide having a less oxygen content than the oxygen content allowed by the stoichiometric composition. In this regard, the valence of a transition metal oxide can be analyzed by an analysis apparatus on the market.

Such an incomplete oxide of a transition metal absorbs ultraviolet light or visible light, and changes a chemical property thereof by being irradiated with ultraviolet light or visible light. As a result, although it is an inorganic resist, there arises a difference in the speed of etching during the development process. That is to say, a selected ratio is obtained. Also, a resist material made of an incomplete oxide of a transition metal has a small fine-grain size of a film material, thus a boundary pattern between an unexposed portion and an exposed portion becomes clear, and thereby it is possible to increase resolution.

Incidentally, an incomplete oxide of a transition metal has a different characteristic as a resist material by the degree of oxidation, and thus it is necessary to appropriately select an optimum degree of oxidation. For example, for an incomplete oxide of a transition metal having a far less lower oxygen content than a stoichiometric composition thereof, it is inconveniently necessary to have a large irradiation power in the exposure process and a long time for the development processing. It is therefore preferable to use an incomplete oxide of a transition metal having a little less lower oxygen content than a stoichiometric composition thereof.

Specific transition metals constituting a resist material include Ti, V, Cr, Mn, Fe, Nb, Cu, Ni, Co, Mo, Ta, W, Zr, Ru, Ag, etc. Among these, it is preferable to use Mo, W, Cr, Fe, and Nb. In view of obtaining a large chemical change by ultraviolet light or visible light, it is preferable to use Mo or W in particular.

A mastering apparatus of the present embodiment exposes the master 103, on which such inorganic resist has been applied, to laser light in order to form pit-patterns by heat recording operation.

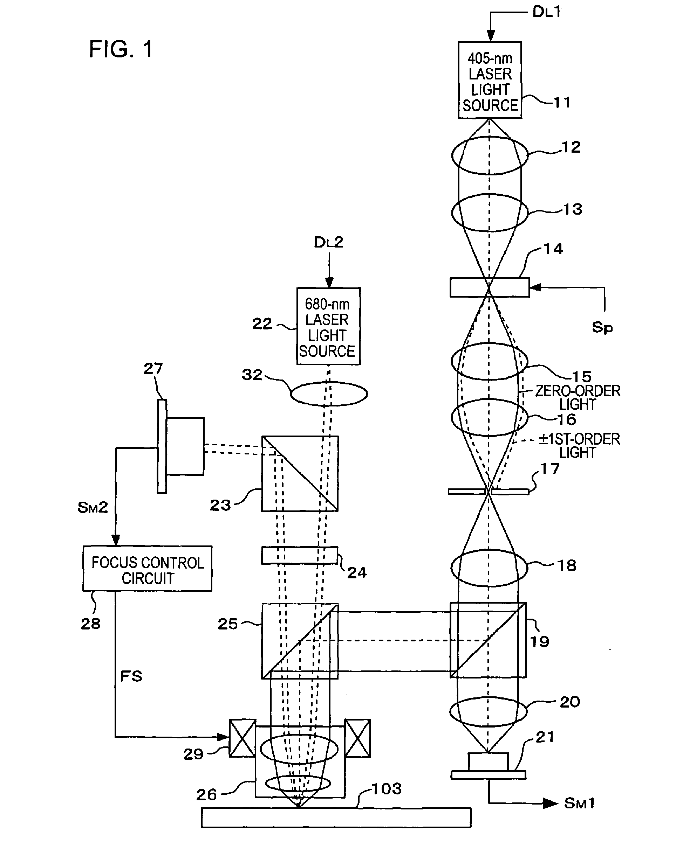

Fig. 1 illustrates an exposure optical system of the mastering apparatus according to the present embodiment.

A laser-light source 11, which is a semiconductor laser, outputs laser light having, for example a wavelength of 405 nm. A laser-drive signal DL1, which is a pulse modulation signal converted from an NRZ modulation signal such as an RLL (1-7) pp, etc., by a signal-conversion circuit, is supplied to the laser-light source 11, and the laser-light source 11 emits laser light in accordance with the laser-drive signal DL1.

The laser light emitted from the laser-light source 11 is collimated by a collimator lens 12, and then is converged by a lens 13 to be guided on an AOM 14.

A light-intensity control signal Sp described below is supplied to the AOM 14. The AOM 14 is disposed such that only zero-order light is transmitted when there is no input of the light-intensity control signal Sp, whereas the zero-order light is attenuated and ±1st-order diffraction light becomes the greatest when there is input of a predetermined voltage level (the voltage V2 described below) as the light-intensity control signal Sp. In this regard, the zero-order light is used for the subsequent exposure. In this manner, it is possible to reduce the laser-power loss at the AOM 14 at a minimum.

The laser light (zero-order light and other diffraction light) that has passed the AOM 14 is collimated by a collimator lens 15, then are converged by a lens 16, and enters a pin hole 17 which functions as a spatial frequency filter. This pin hole 17 is disposed so as to transmit only the zero-order diffraction light and blocks light other than the zero-order diffraction light.

That is to say, when the zero-order diffraction light is attenuated by the AOM 14, 1st-order diffraction light or higher is generated to become stray light. This stray light is blocked by the pin hole 17. The hole diameter of the pin hole 17 may be about 1.5 to 3 times the spot diameter of the laser beam. If the hole diameter is larger than this, the stray light component is transmitted, and if it is smaller than this, the light transmission efficiency deteriorates drastically.

The pin hole 17 removes 1st-order diffraction light or higher, and at the same time, a diffraction pattern specific to a semiconductor laser beam is also reduced.

The laser light (zero-order light) that has passed the pin hole 17 is collimated by a collimator lens 18, and then enters a beam splitter 19.

Next, the beam splitter 19 separates the laser light into a transmitted-light component and a reflected-light component. The transmitted-light component is irradiated on a photo detector 21 through a lens 20.

The photo detector 21 outputs a light-intensity monitor signal SM1 in accordance with the received amount of light level (light intensity).

The reflected-light component reflected by the beam splitter 19 enters a dichroic mirror 25. In this case, the dichroic mirror 25 reflects light of a wavelength band including 405 nm, and transmits light of a wavelength band including 680 nm. Accordingly, the laser light reflected by the beam splitter 19 is reflected by the dichroic mirror 25, and is irradiated on the inorganic resist surface of the master 103 through an infinity-system objective lens 26. That is to say, an exposure pattern as a pit string is formed on the master 103 by the heat recording of the laser light from the laser light source 11.

On the other hand, a laser light source 22 is a laser light source which outputs laser light for focus control using an off-axis method, for example a semiconductor laser which outputs, for example laser light having a wavelength of 680 nm. The laser light source 22 continuously emits laser light on the basis of a laser-drive signal DL2.

The output laser light having a wavelength of 680 nm passes a lens 32, a polarization beam splitter (PBS) 23, furthermore, goes through a λ/4 wavelength plate 24, and enters the dichroic mirror 25. Next, the laser light passes the dichroic mirror 25, and is irradiated to the master 103 from the objective lens 26.

The return light from the master 103 passes the objective lens 26, the dichroic mirror 25, the λ/4 wavelength plate 24, and enters the polarization beam splitter 23. In this case, the light passes the λ/4 wavelength plate 24 two times on an outward trip and on a return trip, and thus a plane of polarization is rotated 90°, and thus the light is reflected by the polarization beam splitter 23. The light reflected by the polarization beam splitter 23 is received by a position-sensor diode 27.

The position-sensor diode 27 is set such that the return light is irradiated on a center thereof when the focus is on, that is to say, the objective lens 26 is controlled to be at the right focus position. Also, the position-sensor diode 27 outputs a signal SM2 showing the light-reception position. That is to say, the signal SM2 indicating the amount of difference from the center of the light-reception position on the position-sensor diode 27 becomes a focus-error signal. The position-sensor diode 27 supplies the focus-error signal to a focus-control circuit 28.

The focus-control circuit 28 generates a servo-drive signal FS to an actuator 29 holding the objective lens 26 in the focus position in a movable manner on the basis of the signal SM2 as a focus-error signal. The actuator 29 drives the objective lens 26 in a direction of moving near and apart to and from the master 103 on the basis of the servo-drive signal FS, and thereby focus servo is performed.

At this time, as described above, an exposure laser beam having a wavelength of 405 nm irradiated from the laser light source 11 on the master 103 through the objective lens 29 is focused on the exposure master 103. The master 103 is produced by forming a film of inorganic resist made of a metal oxide on a silicon wafer. The master 103 absorbs a laser beam of 405 nm, and thus, in particular, an area in the vicinity of the center of the irradiated portion, which is heated at a high temperature, is polycrystallized. As described in Fig. 10(d), the exposed master is developed by alkali developing solution such as NMD3, etc., thus only the exposed portion is eluted, and thereby a desired pit shape is formed.

On the other hand, the laser light for focus control is laser light having no exposure sensitivity, for example having a wavelength of 680 nm, and thus there is no influence on the exposure.

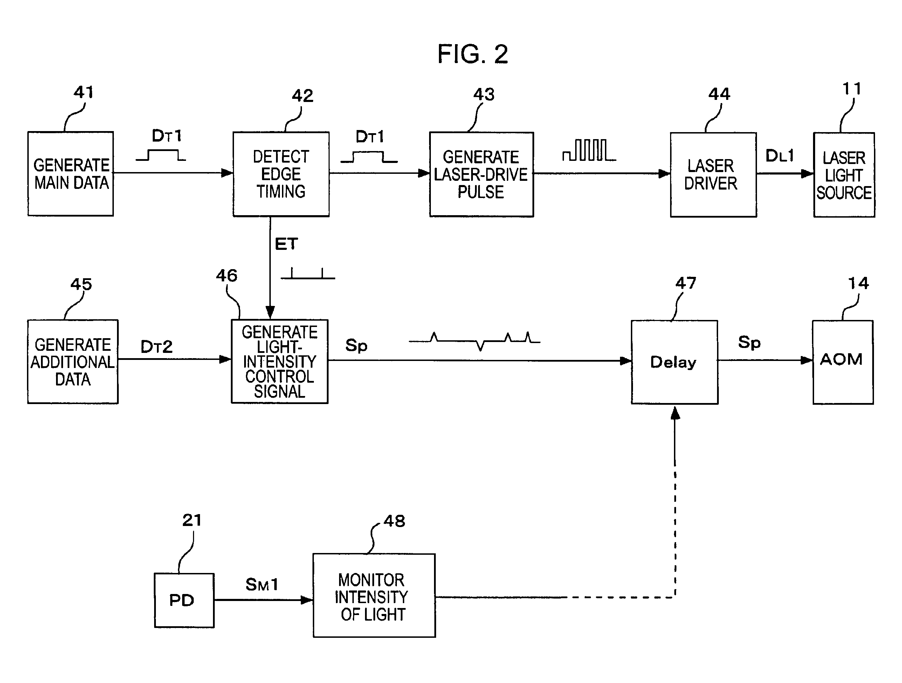

Fig. 2 illustrates a circuit system which supplies the laser-drive signal DL1 to the laser light source 11, and supplies the light-intensity control signal Sp to the AOM 11.

A main-data generating section 41 outputs main data to be recorded as a pit-exposure pattern on the master 103. For example, if it is assumed that the apparatus is a system for producing a disc recording a video signal, the main-data generating section 41 outputs data DT1 as NRZ data produced by RLL (1-7) pp encoding the video signal. In this case, the data DT1 is a data pulse which becomes "H" at pitforming timing, and becomes "L" at the timing of a land between pits.

An edge timing detecting section 42 detects the edge timing of the data DT1, and supplies an edge-timing signal ET to a light-intensity control signal generating section 46. The edge-timing signal ET becomes a signal indicating the rise timing and the fall timing of the data DT1.

Also, the data DT1 is supplied to a laser-drive pulse generating section 43. The laser-drive pulse generating section 43 generates a laser-drive pulse for actually pulse-emission driving the laser light source 11 on the basis of the data DT1. That is to say, as shown in Fig. 11(a), the laser-drive pulse generating section 43 generates a pulse waveform in order to emit laser light at the timing of the preheating pulse Pp and the pulses P1 to Pn and with the light intensity thereof in accordance with the length of a pit to be formed.

The laser-drive pulse is supplied to a laser driver 44. The laser driver 44 applies a drive current to the semiconductor laser as the laser light source 11 on the basis of the laser-drive pulse. Thus, laser pulses are emitted with light intensity in accordance with the laser-drive pulse.

On the other hand, an additional data generating section 45 outputs the data DT2 as additional data. The additional data DT2 is not limited in particular. For example, if the main-data generating section 41 outputs a video signal, the data DT2 may be an audio signal correspondingly. Alternatively, the data DT2 may be control information, physical information of the disc, address information, etc. The data DT2 may be text data, image data such as a thumb nail, etc. That is to say, the data DT2 may be any data to be recorded on a disc together with the main data from the main-data generating section 41.

In this example, the additional data DT2 is encoded into three-valued data, "+1, 0, -1" by the light-intensity control signal generating section 46. The three values are output as the light-intensity control signal Sp at a predetermined pulse-edge timing of the laser pulse emitted from the laser light source 11.

That is to say, the light-intensity control signal generating section 46 calculates the timing of the pulse P1 and the pulse Pn in the pulse light output from the laser light source 11 on the basis of the edge-timing signal ET. The light-intensity control signal generating section 46 generates a voltage value corresponding to any one of +1, 0, and -1 at the respective timing of the pulses P1 and Pn.

In this regard, the voltage value corresponding to "0" is set to be a potential V1 having a predetermined offset from 0 V.

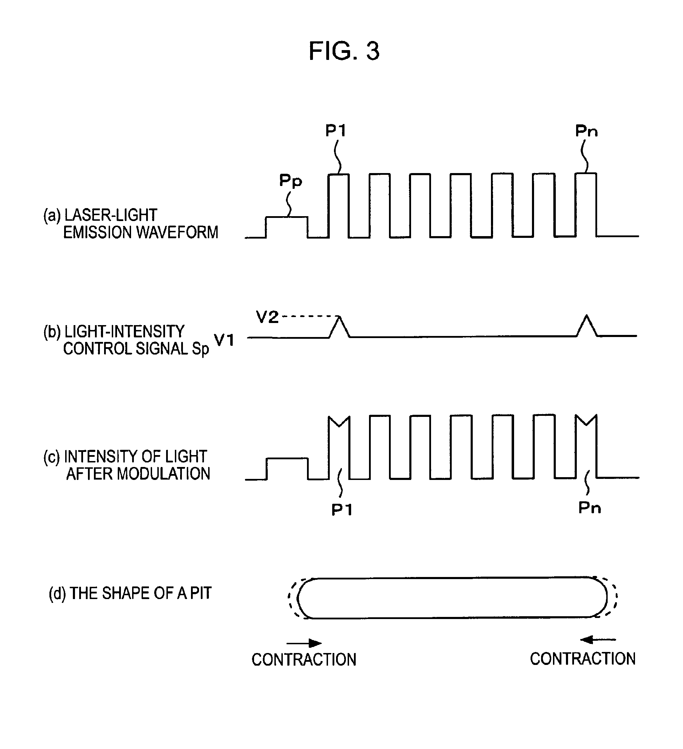

Figs. 3(a) and 3(b) illustrate a laser-light emission waveform and a light-intensity control signal Sp from the laser light source 11. For example, here, a state is displayed in which a voltage V2 (V2 > V1) is given at the timing of the pulses P1 and Pn as the light-intensity control signal Sp in order to provide information "+1" at the timing of the pulses P1 and Pn, respectively.

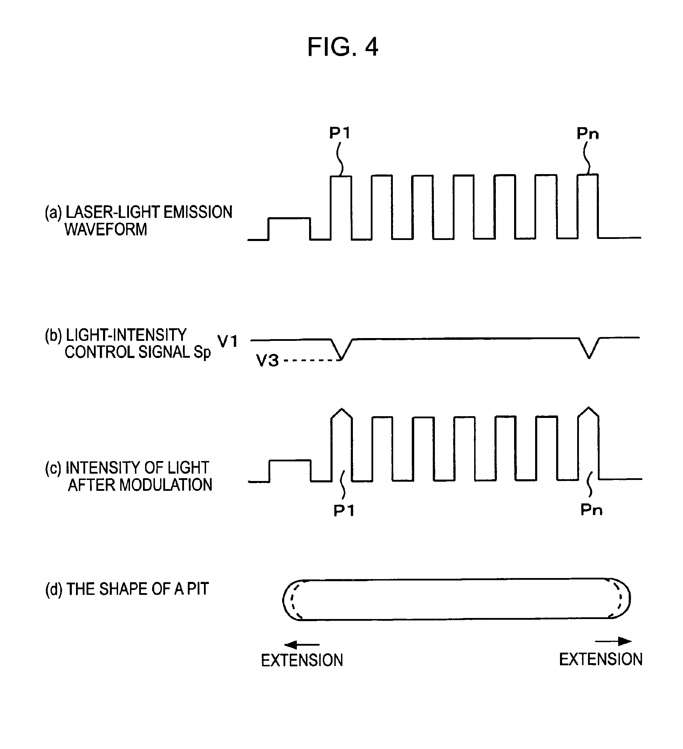

Also, in the same manner, Figs. 4(a) and 4(b) illustrate a laser-light emission waveform and a light-intensity control signal Sp from the laser light source 11. For example, here, a state is displayed in which a voltage V3 (V3 < V1) is given at the timing of the pulses P1 and Pn as the light-intensity control signal Sp in order to provide information "-1" at the timing of the pulses P1 and Pn, respectively.

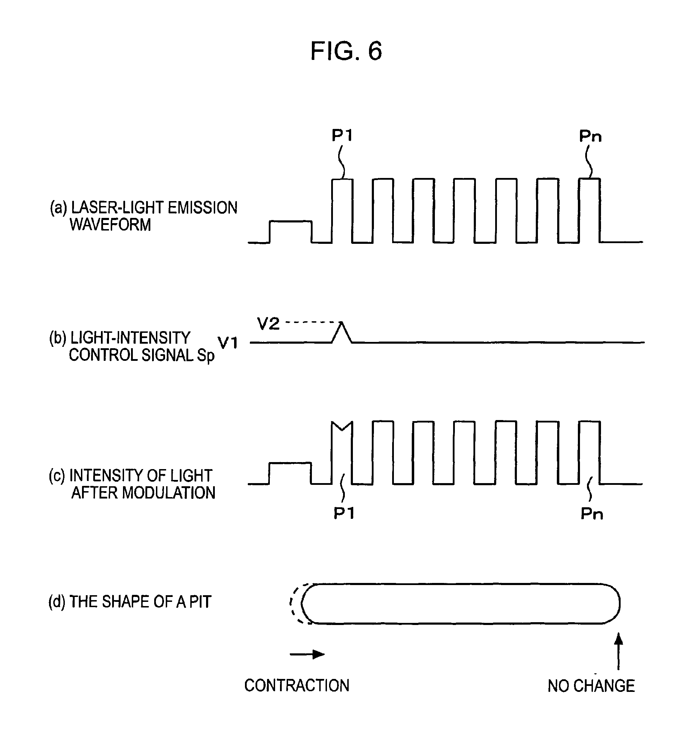

Furthermore, in the same manner, Figs. 6(a) and 6(b) illustrate a laser-light emission waveform and a light-intensity control signal Sp from the laser light source 11, respectively. For example, here, a state is displayed in which a voltage V2 is given at the timing of the pulse P1, and a voltage V1 is remained at the timing of the pulse Pn as the light-intensity control signal Sp in order to provide information "+1" at the timing of the pulse P1 and to provide information "0" at the timing of the pulse Pn, respectively.

The light-intensity control signal Sp output from the light-intensity control signal generating section 46 in Fig. 2 is subjected to delay-timing adjustment, and then is input into the AOM 14. The AOM 14 controls the diffraction efficiency in accordance with a voltage level of the light-intensity control signal Sp. That is to say, the AOM 14 controls the amount level of ±1st-order diffraction light.

Also, a light-intensity monitor signal SM1 obtained from the photo detector 21 shown in Fig. 1 is supplied to a light-intensity monitor section 48 in order for the light intensity to be monitored. On the basis of the monitor result of the light-intensity monitor section 48, a determination is made on whether the timing (the timing of giving the voltages V2 and V3) of the light-intensity control signal Sp matches the timing of the pulses P1 and Pn of the laser light from the laser light source 11. The delay time by a delay circuit 47 is adjusted on the basis of the determination, and thus the timing of the light-intensity control signal Sp and the timing of the pulses P1 and Pn are made to match.

In this regard, the light-intensity monitor section 48 may allow an operator to monitor the timing difference by a display monitor and may allow the operator to manually adjust the delay time of the delay circuit 47. Alternatively, the light-intensity monitor section 48 may output the amount of the timing difference as a signal from the shape of the pulse of the light intensity, and may automatically control the delay time of the delay circuit 47 so as to match the timing.

The operation of the mastering apparatus having such a configuration in Figs. 1 and 2 is as follows.

As described above, the laser light pulse-emitted from the laser light source 11 is condensed and enters the AOM 14. The light-intensity control signal Sp, whose voltage is controlled in synchronism with the light pulses P1 and Pn forming the beginning and the end of a pit, respectively, among the laser beam pulses, is input in the AOM 14.

At this time, as shown in Figs. 3(a) and 3(b), it is assumed that the light-intensity control signal Sp becomes a voltage V2 in synchronism with the pulses P1 and Pn. Thus, the diffraction efficiency of the AOM 14 becomes high at the timing of the pulses P1 and Pn, and the amount of attenuation of zero-order light becomes large. Since the light other than zero-order light such as ±1st-order diffraction light is blocked by the pin hole 17, the light intensity of the laser light irradiated on the master 103 through the beam splitter 19, the dichroic mirror 25, the objective lens 29 becomes as shown by Fig. 3(c). That is to say, the light intensity decreases at the timing of the pulses P1 and Pn.

The light intensity of the pulse P1 influences the position of the beginning edge of a pit. Also, the light intensity of the pulse Pn influences the position of the end edge of a pit.

When the laser light is modulated such that the light intensity of the pulse P1 decreases as shown in Fig. 3(c), the amount of heat storage at the beginning side of a pit decreases, and thus the position of the beginning edge of a pit is moved in the direction of shortening the pit as shown in Fig. 3(d). In this regard, the broken lines indicate the edge positions of a pit usually formed when the light intensity is not modulated, and the solid lines indicate the edge positions of a pit formed when the light intensity is modulated.

Also, in the case of Fig. 3(c), the laser light is modulated so as to decrease the light intensity of the pulse Pn. Thus, the amount of heat storage at the end side of a pit decreases, and thus the position of the end edge of the pit is also moved in the direction of shortening the pit as shown in Fig. 3(d).

Figs. 4(a) and 4(b) show the case where the light-intensity control signal Sp becomes a voltage V3 in synchronism with the pulses P1 and Pn. In this case, the diffraction efficiency of the AOM 14 becomes low at the timing of the pulses P1 and Pn. That is to say, the amount of attenuation of zero-order light becomes small. In other words, the AOM enters a state of transmitting the largest amount of zero-order light. In this regard, the voltage V3 ≥ 0 V.

Thus, the zero-order light component which is not blocked by the pin hole 17 relatively increases. Accordingly, the light intensity of the laser light irradiated on the master 103 through the objective lens 29 becomes as shown Fig. 4(c). That is to say, the intensity of light increases at the timing of the pulses P1 and Pn (becomes a high level compared with the case where there is no light-intensity modulation).

Thus, the amount of heat storage at both the beginning side and at the end side of a pit increases, and both of the positions of the beginning edge and the end edge of a pit are moved in the direction of extending the pit as shown in Fig. 4 (d) .

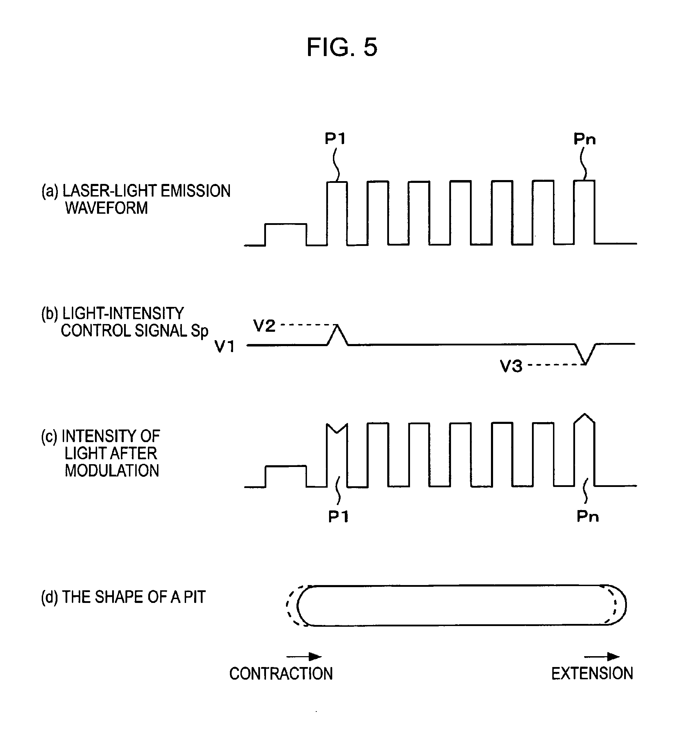

Figs. 5(a) and 5(b) show the case where the light-intensity control signal Sp becomes a voltage V2 in synchronism with the pulse P1, and the light-intensity control signal Sp becomes a voltage V3 in synchronism with the pulse Pn. In this case, the diffraction efficiency of the AOM 14 becomes high at the timing of the pulse P1, and the diffraction efficiency of the AOM 14 becomes low at the timing of the pulse Pn.

Thus, the light intensity of the laser light irradiated on the master 103 through the objective lens 29 decreases at the timing of the pulse P1 and increase at the timing of the pulse Pn as shown Fig. 5(c).

Accordingly, the amount of heat storage at the beginning side of a pit decreases and the position of the beginning edge of the pit is moved in the direction of shortening the pit, whereas the amount of heat storage at the end side of a pit increases and the position of the end edge of the pit is moved in the direction of extending the pit as shown in Fig. 5(d).

Figs. 6(a) and 6(b) show the case where the light-intensity control signal Sp becomes a voltage V2 in synchronism with the pulse P1, and the light-intensity control signal Sp is kept at the voltage V1 in synchronism with the pulse Pn. In this case, the diffraction efficiency of the AOM 14 becomes high at the timing of the pulse P1, and the diffraction efficiency of the AOM 14 remains as usual at the timing of the pulse Pn.

Thus, the light intensity of the laser light irradiated on the master 103 through the objective lens 29 decreases at the timing of the pulse P1 and remains as usual at the timing of the pulse Pn as shown Fig. 6(c).

Accordingly, the amount of heat storage at the beginning side of a pit decreases and the position of the beginning edge of the pit is moved in the direction of shortening the pit, whereas the amount of heat storage at the end side of a pit remains as usual and the position of the end edge of the pit remains as usual as shown in Fig. 6(d).

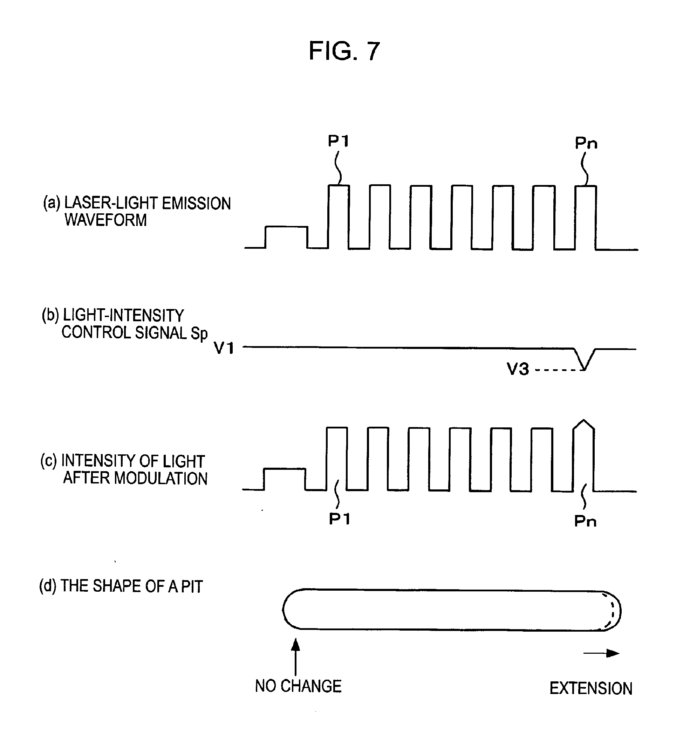

Figs. 7(a) and 7(b) show the case where the light-intensity control signal Sp is kept at the voltage V1 in synchronism with the pulse P1, and the light-intensity control signal Sp becomes a voltage V3 in synchronism with the pulse Pn. In this case, the diffraction efficiency of the AOM 14 remains as usual at the timing of the pulse P1, and the diffraction efficiency of the AOM 14 becomes low at the timing of the pulse Pn.

Thus, the light intensity of the laser light irradiated on the master 103 through the objective lens 29 remains as usual at the timing of the pulse P1 and increases at the timing of the pulse Pn as shown Fig. 7(c).

Accordingly, the amount of heat storage at the beginning side of a pit remains as usual and the position of the beginning edge of the pit remains as usual, whereas the amount of heat storage at the end side of a pit increases and the position of the end edge of the pit is moved in the direction of extending the pit as shown in Fig. 7(d).

To sum up, in this example, as is understood from the above, the positions of the beginning edge and the end edge of a pit to be formed by exposure can be changed minutely by controlling the voltage level of the light-intensity control signal Sp given to the AOM 14 to be V1, V2, and V3 at the timing of the pits P1 and Pn in accordance with the additional data DT2.

Also, it is possible to record three values "0, +1, and -1" at the position of the beginning edge of a pit, and also to record three values "0, +1, and -1" at the position of the end edge of a pit by generating the voltage levels V1, V2, and V3 at the timing of the pulses P1 and Pn corresponding to, for example "0, +1, and -1" of the additional data DT2.

Of course, the amount of change in the positions of the beginning edge and the end edge is within a range of having no influence on the reproduction of a pit string based on the data DT1. That is to say, the amount of the change remains at a certain value so that the jitter level on the reproduction signal is allowed to be corrected by the error-correction ability.

As described above, in this example, the control of the edge positions of a pit to be formed are not performed by the laser-pulse timing as the laser-drive signal DL1 given to the laser-light source 11. Laser light is emitted by a usual pulse modulation from the laser-light source 11 without edges being changed, and then only the exposure power of the laser beam output from the laser light source 11 is changed at both ends of a pit by light-intensity control means, that is to say, from the AOM 14 to the pin hole 17. Additional information is recorded by giving the change of an edge position of a pit under the control of light-intensity at pit-edge portions.

Accordingly, it is not necessary to provide a special configuration change in the laser-drive pulse generating section 43, etc., in Fig. 2.

Also, when the laser-drive pulse generating section 43 changes edge positions of a pit themselves, the time resolution of the edge changes is limited by the time resolution of a delay line. However, as in this example, when edge changes are given by the level of the light-intensity control signal Sp to be given to the AOM 14, the control by a voltage can be used, and thus the control can be performed with more precise resolution. Also, even if the voltage resolution in the D/A conversion in the light-intensity control signal generating section 46 is limited, it is possible to generate more precise voltage change by attenuating the voltage or by adding another voltage signal. Accordingly, this example can be achieved relatively easily when the recording density becomes high and the recording speed becomes high.

Next, the master 103 is produced by being exposed to light to form a pit pattern using such a mastering apparatus of the present embodiment. On the disc (playback-only optical disc) produced on the basis of the master 103 through the steps illustrated in Fig. 10, main data is recorded by a pit string and additional data is recorded by the edge positions of each pit.

In this regard, as described above, for the light-intensity control signal Sp, a voltage V1 having an offset from 0 V is used as a usual level. The voltage value is increased to the voltage V2 and decreased to the voltage V3 on the basis of the voltage V1. This is because light pulse is difficult to be increased.

That is to say, the voltage V1 is a level to decrease the light intensity at a certain degree. The level of light intensity is controlled by increasing and decreasing the amount of light on the basis of the voltage V1.

Accordingly, the laser output power of the laser light source 11 is set to a level of forming a usual pit in accordance with the decreased light level by the diffraction efficiency of the voltage V1.

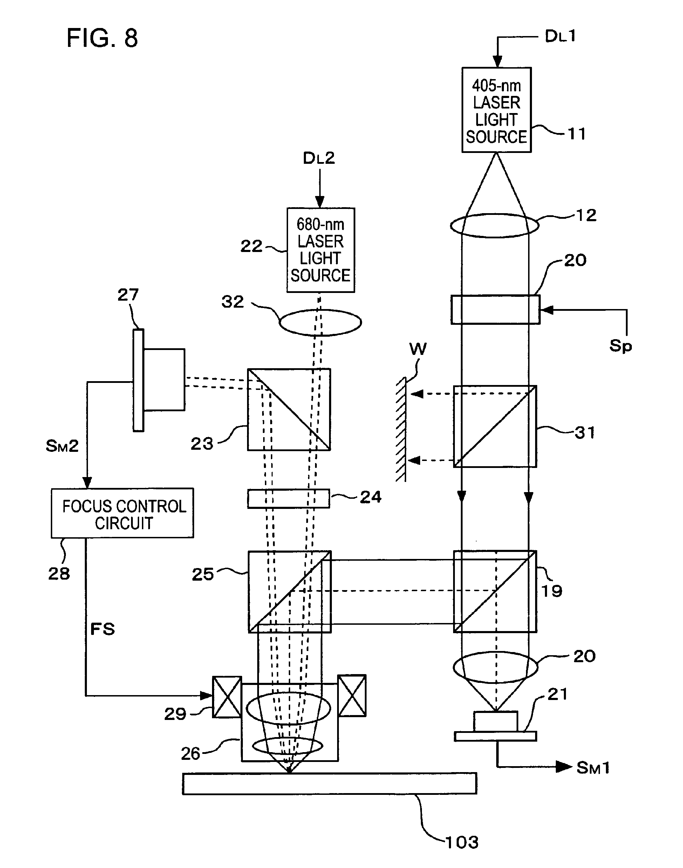

Fig. 8 illustrates a mastering apparatus according to another embodiment. In this embodiment, the light-intensity control means has a configuration including an EOM 30 and a polarization-beam splitter 31 in place of a configuration including the AOM 14 and the pin hole 17. The same portions as those in Fig. 1 have the same reference numerals and their descriptions are omitted.

In the example in Fig. 8, the laser light pulse-emitted from the laser-light source 11 is collimated by a collimator lens 12, and then enters the EOM 30.

A light-intensity control signal Sp, whose voltage value is controlled at the timing corresponding to the pulses P1 and Pn, is supplied to the EOM 30 in the same manner as the AOM 14 described above.

In the EOM 30, the laser light is polarization controlled in accordance with the voltage of the light-intensity control signal Sp. The laser light, which has been subjected to the polarization control by the EOM 30, enters the polarization beam splitter 31. Next, the polarization beam splitter 31 separates the laser light into a polarization-light component, and part of the light enters a wall W (that is to say, is discarded). Another part of the laser light is transmitted and enters the beam splitter 19. Thereafter, the laser light is irradiated on the master 103 through a dichroic mirror 25 and an objective mirror 26 in the same manner as in Fig. 1 described above.

That is to say, in this example, the polarization by the EOM 30 is variably controlled at the timing of the pulses P1 and Pn, and thereby the amount of the light component to be reflected by the polarization beam splitter 31 to be discarded is controlled. Thus, the light intensity by the pulses P1 and Pn is controlled. Accordingly, in the same manner as in the case of Fig. 1 described above, it is possible to control the positions of the beginning edge and the end edge of a pit to be formed by exposure. Thus, it is possible to give information as the additional data DT2.

Incidentally, in the embodiment illustrated in Figs. 3 to 7, an example of giving three values "0, +1, -1" has been described. However, it is possible to give information including a greater number of values.

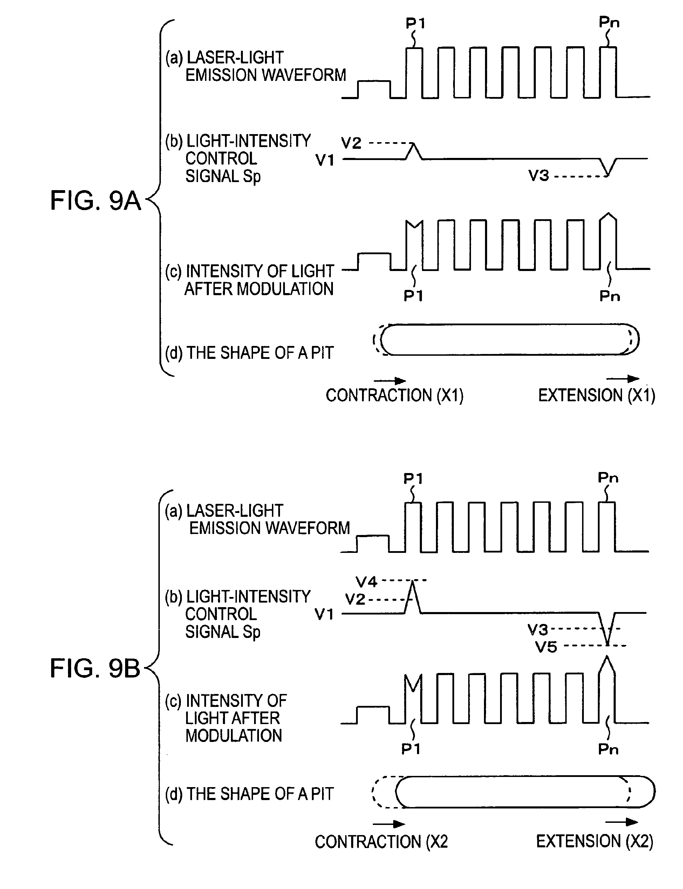

For example, Fig. 9 illustrates an example of converting the additional data DT2 into five-valued data and controlling the edge positions of a pit corresponding to the five values "-2, -1, 0, 1, 2".

For the light-intensity control signal Sp, voltages V5, V3, V1, V2, and V4 are given to the AOM 14 (or the EOM 30) corresponding to respective individual values "-2, -1, 0, 1, 2" at the timing of pulses P1 and Pn.

Fig. 9A illustrates a state in which the light-intensity control signal Sp is set to be a voltage V2 at the timing of the pulse P1 and is set to be a voltage V3 at the timing of the pulse Pn. In this case, as shown in the figure, the light intensity of the laser beam pulses P1 and Pn are modulated, and the beginning edge and the end edge of a pit are changed in the direction of shortening the pit and in the direction of extending the pit, respectively.

Also, Fig. 9B illustrates a state in which the light-intensity control signal Sp is set to be a voltage V4 at the timing of the pulse P1 and is set to be a voltage V5 at the timing of the pulse Pn. In this case, as shown in the figure, the light intensity of the laser light pulses P1 and Pn are modulated more strongly than the case of Fig. 9A, and the beginning edge of a pit is changed in the direction of further shortening the pit and the end edge of a pit is changed in the direction of further extending the pit.

That is to say, the positions of the beginning edge and the end edge are allowed to be controlled in five levels, respectively.

It goes without saying that the recording capacity as the additional data DT2 can be increased by expressing the information represented by the edge positions in multivalues.

In this regard, the additional data DT2 may be three-valued, five-valued, or more multi-valued, and may be two-valued as a matter of course. For example, the additional data DT2 may be expressed by "0" or "1" by the edge positions of a pit using the voltages V2 and V3 described above. Alternatively, the additional data DT2 may be expressed by "0" or "1" by the edge positions of a pit using the voltages V1 and V2, or the voltages V1 and V3.

Also, all the pits on the master 103 to be exposed (that is to say, all the pits on a playback-only optical disc produced from the master 103) may be the target of the recording of the additional data DT2 by controlling the edge positions of the pits. Alternatively, part of the pits on the disc may be the target of the recording of the additional data DT2 by controlling the edge positions thereof.

Also, in the above-described embodiment, the present invention is applied to pulse-emitted laser light. However, the present invention can also be applied to NRZ-modulated laser light.

Furthermore, an off-axis method is used for the focus control method of the objective lens 26. However, the focus control may be performed by an astigmatic method, etc., using the reflected light from the master 103, which is produced by the exposure beam emitted from the laser light source 11.

It should be understood by those skilled in the art that various modifications, combinations, sub-combinations and alterations may occur depending on design requirements and other factors insofar as they are within the scope of the appended claims or the equivalents thereof.

## Claims

1. A mastering apparatus for forming a pit string based on recording data on an optical-recording-medium master by a heat recording method using laser-light irradiation, the mastering apparatus comprising:
laser-light-source means for emitting laser light at the timing based on first recording data in order to form a pit;
light-intensity control means for controlling light intensity of the laser light output from the laser-light-source means on the basis of second recording data; and
optical system means for guiding the laser light onto the optical-recording-medium master through the light-intensity control means.

2. The mastering apparatus according to Claim 1,
wherein the laser light output from the laser-light-source means is pulse-light-emission controlled in a period of forming one pit, and
the light-intensity control means controls the light intensity in part of the pulse-light-emission period in the pulse-light emission.

3. The mastering apparatus according to Claim 1,
wherein the light-intensity control means controls the light intensity by controlling diffraction efficiency using an acousto-optical modulator in order to transmit only particular diffraction light using a spatial frequency filter.

4. The mastering apparatus according to Claim 1,
wherein the light-intensity control means controls the light intensity by polarization control using an electro-optical modulator in order to transmit only a particular polarization component using a polarization-component separation modulator.

5. A method for mastering in order to form a pit string based on recording data on an optical-recording-medium master by a heat recording method using laser light irradiation, the method comprising the steps of:
laser-emitting for emitting laser light in order to form a pit at the timing based on first recording data;
light-intensity controlling for controlling light intensity output in the laser-emitting step based on second recording data; and
exposing for guiding the laser light after being subjected to light-intensity controlling in the light-intensity controlling step.

6. The method for mastering according to Claim 5,
wherein the laser light is output by being pulse-emission controlled in a period of forming one pit in the laser-emitting step, and
the light intensity is controlled in part of the pulse-emission period in the pulse emission in the light-intensity controlling step.

7. The method for mastering according to Claim 5,
wherein the light intensity is controlled by controlling diffraction efficiency using an acousto-optical modulator in order to transmit only particular diffraction light using a spatial frequency filter in the light-intensity controlling step.

8. The method for mastering according to Claim 5,
wherein the light intensity is controlled by polarization controlling using an electro-optical modulator in order to transmit only a particular polarization component using a polarization-component separation element in the light-intensity controlling step.

9. An optical recording medium comprising a pit string formed based on first recording data,
wherein, in all of or part of each pit constituting the pit string, an edge position in the direction of the pit string is set on the basis of second recording data.

10. A mastering apparatus for forming a pit string based on recording data on an optical-recording-medium master by a heat recording method using laser-light irradiation, the mastering apparatus comprising:
a laser light source emitting a laser beam at the timing based on first recording data in order to forming a pit;
a light-intensity controller controlling beam intensity of the laser light output from the laser light source on the basis of second recording data; and
an optical system guiding the laser light onto the optical-recording-medium master through the light-intensity control means.
